# FASCICULE DE BREVET EUROPEEN

(11) **EP 2 669 051 B1**
(45) Date de publication et mention de la délivrance du brevet: **04.12.2019**
(21) Numéro de dépôt: 13169617.1
(22) Date de dépôt: 29.05.2013
(51) Int. Cl.: B25B 21/00, F16B 1/00, F16B 19/10, B25B 31/00

(54) **Famille de fixations temporaires et dispositif de pose de telles fixations**
Set von vorübergehenden Befestigungselementen, und Montagevorrichtung für solche Befestigungselemente
Family of temporary fasteners and device for applying such fasteners

(30) Priorité: 30.05.2012 FR 1254964
(43) Date de publication de la demande: 04.12.2013
(73) Titulaire: Lisi Aerospace, 75583 Paris Cedex 12 (FR)
(72) Inventeur: Prot, Philippe, 18500 VIGNOUX SUR BARANGEON (FR); Luneau, Etienne, 36100 SEGRY (FR); Gabillon, Alexis, 94800 VILLEJUIF (FR); Des Courtis, Vianney, 75116 PARIS (FR)
(74) Mandataire: Ipside

(56) Documents cités:
- EP-A1- 0 336 808
- GB-A- 2 126 146

## Description

La présente invention se rapporte à des fixations temporaires, de type agrafes d'épinglage, ainsi qu'à un dispositif de pose de telles fixations.

Dans l'industrie aéronautique, avant de réaliser l'assemblage définitif de tôles ou analogues, il est connu de procéder à un assemblage temporaire des tôles au moyen d'agrafes insérées dans des trous traversants.

De telles agrafes, par exemple décrites dans le document GB2126146 ou le document EP0336808, comprennent typiquement :
- un corps pourvu d'une face d'appui susceptible de venir au contact d'une face avant des structures à assembler,
- au moins une pince destinée à traverser les perçages et pourvue d'un bec d'accrochage susceptible de s'appliquer contre une face arrière des structures à assembler,
- un mécanisme déplaçable par rapport au corps, le mécanisme comprenant une tige filetée disposée coaxialement au corps, une extrémité de la tige étant prolongée par la pince, le mécanisme comprenant en outre un écrou de commande monté sur une autre extrémité de la tige. Ce mécanisme permet, par un premier déplacement, de faire passer les becs d'une position « fermée » à une position « ouverte » telle que le diamètre extérieur formé soit alors supérieur au diamètre des trous traversés. Dans un second temps, le déplacement permet d'appliquer une tension dans les tôles entre les becs ouverts et la face avant du corps.

Ces agrafes sont généralement posées sur les tôles à l'aide d'un appareil moteur de type visseuse/dévisseuse, muni d'un outil de pose comprenant :
- un premier fourreau cylindrique qui immobilise en translation le corps d'une agrafe, après son insertion. Une action de rotation de ce fourreau permet de passer alternativement d'une position dans laquelle l'agrafe peut être insérée ou enlevée à une position dans laquelle l'agrafe est bloquée en translation dans l'outil de pose,
- un deuxième fourreau cylindrique logé dans le premier fourreau, permettant de bloquer en rotation le corps de l'agrafe,
- un troisième fourreau cylindrique logé dans le deuxième fourreau, le troisième fourreau étant entraîné en rotation par l'appareil moteur, une extrémité du troisième fourreau entraînant en rotation l'écrou de commande de l'agrafe.

Un tel outil de pose est notamment décrit dans le document EP0466609.

Entraîné en rotation, l'écrou déplace en translation la tige filetée de l'agrafe, de sorte que les becs d'accrochage et la face d'appui du corps s'appliquent respectivement sur les faces arrière et avant des tôles empilées.

En général, les agrafes sont conçues pour être soumises, lors de leur pose, à un couple de serrage déterminé qui dépend notamment du diamètre de l'agrafe. Lorsque les becs des pinces sont au contact l'une de l'autre (position fermée), les pinces sont conçues de sorte à présenter une forme extérieure sensiblement circulaire ou elliptique dont le plus grand diamètre n'est pas supérieur au diamètre du perçage des tôles à assembler. Dans l'invention, deux fixations temporaires sont ainsi dites de diamètres différents lorsque les pinces présentent en position fermée des formes circulaires de diamètres différents.

Une erreur de couple de serrage pourrait avoir des conséquences fâcheuses, telles que la dégradation des tôles en cas de serrage trop fort, ou un jeu trop important en cas de serrage trop faible. De tels défauts d'assemblage temporaire compromettraient la qualité de l'assemblage définitif.

Lorsqu'un même appareil de pose est utilisé pour deux agrafes de diamètres différents, il est indispensable de régler l'appareil, selon le cas, au couple de serrage approprié.

Il est connu de munir les agrafes de signes d'identification, ou détrompage, tels que par exemple un code couleur. De tels signes permettent à l'opérateur de régler correctement l'appareil de pose selon l'agrafe utilisée. Cependant, un tel système est fastidieux et n'évite pas les erreurs humaines.

Il est connu également d'utiliser plusieurs matériels de pose dédiés géométriquement identiques mais réglés à différentes valeurs de couple. Cependant, un tel système multiplie de besoin en matériel et n'évite pas non plus les erreurs humaines.

La présente invention a pour but de résoudre ces problèmes et de fournir une famille de fixations temporaires du type décrit ci-dessus, munie de moyens permettant à un outil de pose de déterminer automatiquement le couple de serrage approprié à chaque fixation.

Un aspect de l'invention se rapporte en effet à une famille de fixations temporaires pour l'assemblage temporaire d'au moins deux structures préalablement percées, du type comprenant : un corps pourvu d'une face d'appui susceptible de venir au contact d'une face avant des structures à assembler ; au moins une pince destinée à traverser les perçages et pourvue d'un bec d'accrochage susceptible de s'appliquer contre une face arrière des structures à assembler ; un mécanisme déplaçable par rapport au corps, ledit mécanisme comprenant une tige filetée disposée coaxialement au corps, une extrémité de ladite tige étant reliée à la pince, ledit mécanisme comprenant en outre un écrou de commande monté sur ladite tige; ladite famille comportant au moins deux fixations temporaires de diamètres différents et dont les écrous de commande présentent une dimension extérieure radiale identique et une dimension extérieure axiale différente.

Selon la fixation utilisée, la dimension axiale de l'écrou de commande peut être détectée par un dispositif de pose, permettant audit dispositif de déterminer le couple de serrage approprié.

Les différentes longueurs d'écrou peuvent également servir de détrompage visuel pour l'opérateur. Préférentiellement, un identifiant visuel supplémentaire, tel qu'un code couleur, figure sur les fixations.

Un autre aspect de l'invention se rapporte à un ensemble de pose de fixations temporaires, ledit ensemble comprenant une famille de fixations telle que décrite ci-dessus, ainsi qu'un outil de pose comprenant : un premier fourreau cylindrique disposé selon un axe, ledit fourreau étant apte à coopérer avec le corps d'une fixation temporaire pour immobiliser ledit corps en translation selon l'axe ; un deuxième fourreau cylindrique logé dans le premier fourreau, ledit deuxième fourreau étant apte à coopérer avec le corps d'une fixation temporaire pour immobiliser ledit corps en rotation autour de l'axe, un troisième fourreau logé dans le deuxième fourreau, ledit troisième fourreau étant mobile en rotation et en translation selon l'axe par rapport aux premier et deuxième fourreaux, une première extrémité dudit troisième fourreau par rapport à l'axe étant munie de moyens d'entraînement en rotation selon ledit axe, par un arbre de sortie d'un appareil moteur, une seconde extrémité dudit troisième fourreau par rapport à l'axe étant apte à coopérer avec un écrou de commande de la fixation temporaire pour l'entraîner en rotation ; l'outil comprenant en outre un moyen de détection d'une position axiale du troisième fourreau par rapport au premier ou au deuxième fourreau.

La position axiale du troisième fourreau est déterminée par la longueur de l'écrou de commande de la fixation utilisée, ladite longueur étant choisie en fonction du diamètre de la fixation temporaire. L'outil de pose permet donc de reconnaître le diamètre de la fixation utilisée.

De manière préférentielle, l'ensemble comprend en outre un appareil moteur de type visseuse-dévisseuse, ledit appareil comprenant : un arbre de sortie, apte à être relié à la première extrémité du troisième fourreau de l'outil de pose, pour entraîner ledit troisième fourreau en rotation par rapport au premier fourreau ; un boîtier d'asservissement de couple de serrage des fixations temporaires, ledit boîtier comprenant un moyen de réglage de l'appareil selon une valeur de couple de serrage dépendante d'une position axiale du troisième fourreau par rapport au premier fourreau ; un moyen de communication entre le moyen de détection d'une position axiale du troisième fourreau par rapport au premier fourreau et ledit boîtier d'asservissement de couple.

Ainsi, l'outil de pose communique au boîtier d'asservissement une information liée au diamètre de la fixation temporaire, ce qui permet audit boîtier de sélectionner le couple de serrage approprié. Le dispositif de serrage, constitué par l'outil de pose et l'appareil moteur, s'adapte donc automatiquement au diamètre de la fixation utilisée.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : un ensemble de pose de fixations temporaires selon un mode de réalisation de l'invention ;
- Figure 2 : une vue partielle, en coupe, de l'ensemble de la figure 1 ;
- Figure 3 : une autre vue partielle, en coupe, de l'ensemble de la figure 1 ;
- Figure 4 : une vue partielle en coupe d'un ensemble de pose de fixations temporaires selon un deuxième mode de réalisation ;
- Figure 5 : une vue partielle en coupe de l'ensemble de la figure 4 selon une variante de réalisation.

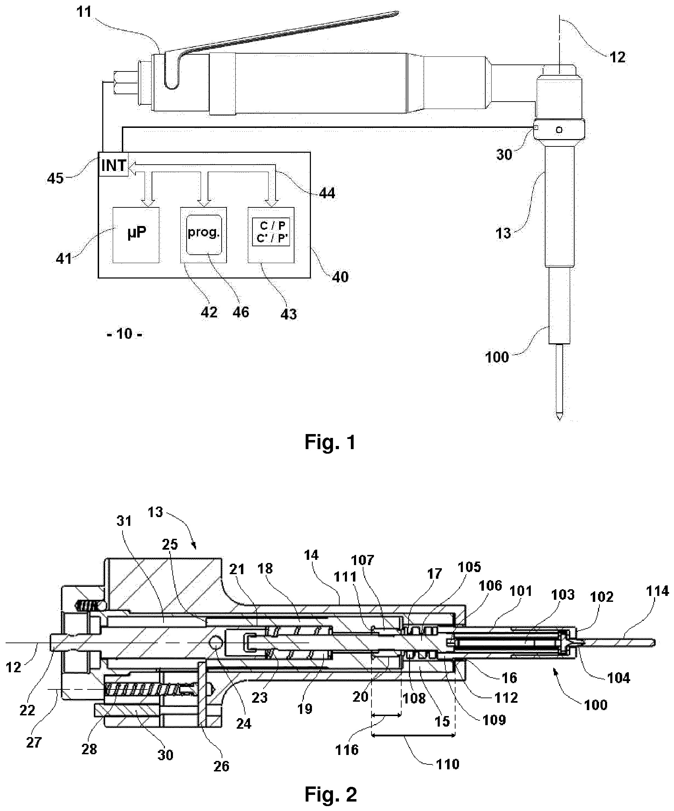

La figure 1 montre une représentation schématique d'un ensemble 10 de pose de fixations temporaires selon un mode de réalisation de l'invention.

L'ensemble 10 comporte un appareil moteur 11, de type visseuse-dévisseuse. L'appareil 11 comprend un moteur (non représenté) apte à entraîner en rotation un arbre de sortie (non représenté), selon un axe 12.

L'appareil 11 est alimenté soit par un câble électrique relié à une source d'alimentation électrique, soit par batterie.

L'appareil 11 peut se présenter sous différentes formes, couramment « droite » avec l'axe du moteur parallèle à l'axe 12, ou encore « équerre », comme représentée sur la figure 1, avec l'axe du moteur perpendiculaire à l'axe 12.

L'arbre de sortie de l'appareil 11 est relié à un outil 13 de pose de fixations temporaires, de type agrafes d'épinglage. L'outil 13 se présente sous une forme sensiblement cylindrique, disposée selon l'axe 12.

La figure 1 montre également une fixation temporaire 100, en l'occurrence une agrafe d'épinglage, insérée dans l'outil 13 en vue de sa pose. Comme il sera décrit par la suite, l'agrafe 100 appartient à une famille de fixations temporaires pouvant faire partie de l'ensemble 10.

La figure 2 représente une vue schématique en coupe de l'outil 13 de pose et de l'agrafe 100 insérée dans ledit outil.

L'agrafe 100 comporte un corps 101, sensiblement cylindrique et disposé selon l'axe 12. Une extrémité du corps 101 selon ledit axe est pourvue d'une face 102 d'appui, susceptible de venir au contact d'une face d'éléments à assembler, tels que des tôles percées.

L'agrafe 100 comporte également deux demi-pinces 103 allongées, pourvues chacune d'un bec 104 d'accrochage susceptible de s'appliquer contre une autre face des tôles à assembler, au travers des perçages alignés des tôles.

Un écarteur 114 sous la forme d'une tôle fixe est disposé entre les demi-pinces 103. L'écarteur a pour fonction de maintenir les becs écartés en position ouverte. Lorsque l'agrafe est en position fermée, les demi-pinces 103 s'étendent hors du corps 101 de sorte que les becs 104 d'accrochage dépassent de l'écarteur et soient au contact l'un de l'autre. Dans l'exemple de la figure 2, l'agrafe est représentée en position ouverte et à la plage de serrage maximale, l'écarteur 114 dépassant des becs.

L'agrafe 100 comporte en outre une tige 105, disposée selon l'axe 12 et mobile par rapport au corps 101. Une extrémité 106 de la tige est fixée aux deux demi-pinces 103.

Un écrou 107 de commande est monté sur un filetage de la tige. Il s'agit par exemple d'un écrou à six pans. Par ailleurs, un ressort 108 de compression est disposé autour de la tige 105 selon l'axe 12, entre l'écrou 107 et une extrémité 109 du corps 101, opposée à la face d'appui 102.

L'outil 13 de pose comprend un premier fourreau 14 cylindrique, disposé selon l'axe 12. Le premier fourreau 14 forme une surface externe de l'outil 13 et délimite une cavité 31 dans laquelle est disposé un deuxième fourreau 15, également disposé selon l'axe 12.

La translation du corps de l'agrafe en direction de la face d'appui 102 est bloquée par le premier fourreau 14, configuré pour coopérer avec l'extrémité 109 du corps 101.

Le deuxième fourreau 15 est configuré de sorte à coopérer avec l'extrémité 109 pour immobiliser le corps 101 en rotation selon l'axe 12. L'extrémité 109 a par exemple une section de forme hexagonale ; à proximité d'une ouverture axiale 16, le deuxième fourreau 15 présente une paroi interne de forme complémentaire à cette section.

Le deuxième fourreau 15 délimite une cavité 17, dans laquelle l'extrémité 109 du corps 101 est insérée, tandis que le reste du corps émerge à l'extérieur de l'outil 13 par l'ouverture axiale 16.

L'outil 13 de pose comprend en outre un troisième fourreau 18 cylindrique, ou manchon, logé dans la cavité 17 du deuxième fourreau 15. Le manchon 18 est mobile en rotation et en translation dans ladite cavité 17, selon l'axe 12.

Le manchon 18 forme une cavité interne 19, ouverte aux deux extrémités du manchon 18 selon l'axe 12. Une extrémité 20 de la cavité 19 a une forme complémentaire à celle de l'écrou 107 de l'agrafe 100. Ainsi, comme visible sur la figure 2, l'écrou 107 vient s'insérer dans l'extrémité 20 de la cavité 19. La surface externe radiale de l'écrou est soit cylindrique soit non cylindrique, et forme par exemple un six pans. La surface interne de l'extrémité 20 peut ainsi coopérer avec l'écrou 107 pour l'entraîner en rotation selon l'axe 12. Dans le cas d'un écrou cylindrique, la surface interne est équipée d'un système complet d'entrainement par coincement.

Une autre extrémité 21 de la cavité 19 reçoit un arbre 22 d'entraînement, destiné à être relié à l'arbre de sortie de l'appareil 11 (figure 1). Le manchon 18 est mobile en translation selon l'axe 12 par rapport à l'arbre 22, qui est pour sa part fixe en translation par rapport au premier fourreau 14. Un ressort 23 de compression est logé dans l'extrémité 21 de la cavité 19, entre deux butées axiales respectivement formées par l'arbre 22 et une surface interne du manchon 18. Le ressort 23 tend à ramener le manchon 18 vers l'ouverture 16 des fourreaux 14 et 15.

Une extrémité axiale 25 du manchon 18, orientée vers l'arbre 22, comporte une fente disposée selon un plan contenant l'axe 12 et perpendiculaire au plan de coupe de la figure 2. Une goupille 24, traversant l'arbre 22, coulisse dans ladite fente. Ainsi, l'arbre 22 peut entraîner en rotation le manchon 18, selon l'axe 12.

Lorsque l'agrafe 100 est insérée dans l'outil 13 en vue de sa pose, l'écrou 107 de commande vient se loger dans l'extrémité 20 de la cavité 19 du manchon. Une extrémité 111 axiale de l'écrou 107, orientée vers l'arbre 22 d'entraînement, vient au contact d'une butée 29 formée par la paroi interne de l'extrémité 20. Au contact axial de l'écrou 107, le manchon 18 adopte alors une certaine position selon l'axe 12 par rapport au premier fourreau 14. Cette position dépend d'une longueur 116 de l'écrou de commande 107.

L'extrémité axiale 25 du manchon 18, orientée vers l'arbre 22, est au contact d'une goupille 26. Ladite goupille est disposée perpendiculairement à l'axe 12. La goupille 26 peut coulisser dans les premier et deuxième fourreaux 14, 15 selon un axe 27, parallèle à l'axe 12. Dans l'exemple de la figure 2, la goupille 26 est en contact avec un ressort 28 de compression, disposé selon l'axe 27. Le ressort 28 tend à maintenir un contact entre la goupille 26 et l'extrémité 25 du manchon 18.

L'outil 13 est également muni d'un capteur 30 de position, situé à proximité de la goupille 26. Le capteur 30 est par exemple un capteur électrique inductif de déplacements linéaires ou autre capteur de position.

Le capteur 30 est apte à déterminer une position de la goupille 26 selon l'axe 27. Cette position dépend de la position axiale du manchon 18 par rapport au premier fourreau 14, ladite position axiale dépendant de la longueur 116 précédemment évoquée.

L'appareil 11 comporte par ailleurs un boîtier 40 d'asservissement de couple de serrage, dont la figure 1 montre une représentation schématique. Le boîtier 40 comprend un microprocesseur 41, une mémoire de programme 42, une mémoire de données 43 et au moins un bus 44 de communication. Par l'intermédiaire d'une interface 45, le capteur 30 est relié au boîtier 40. L'information relative à la position axiale de la goupille 26 peut donc être communiquée au boîtier 40 par le capteur 30.

Le boîtier 40 mémorise un programme 46 qui permet de modifier le réglage de l'appareil 11 pour une valeur souhaitée de couple de serrage. Par ailleurs, la mémoire 43 de données comporte une fonction reliant le couple C de serrage à la position P de la goupille 26 selon l'axe 27.

Lorsque l'agrafe 100 est insérée dans l'outil 13 en position fermée, c'est-à-dire lorsque le ressort 108 n'est pas comprimé et que les becs 104 sont au contact l'un de l'autre, la longueur 116 de l'écrou de commande 107 conditionne la position P de la goupille 26. Le programme 46 adapte donc automatiquement le réglage de l'appareil 11 en fonction de ladite longueur 116, en sélectionnant le couple C approprié. La maîtrise de la longueur 116 est en autre assuré par le verrouillage du premier fourreau 14, bloquant axialement le corps de l'agrafe 101.

Lorsque l'alimentation électrique de l'appareil est à batterie, l'asservissement du couple est assuré par ondes au travers d'un boîtier de communication (non représenté).

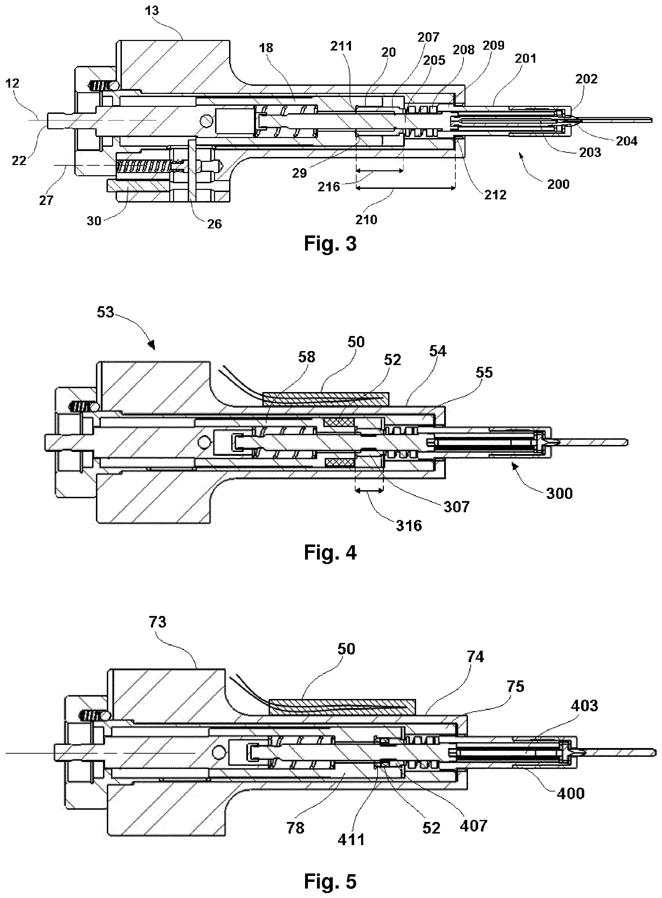

La figure 3 est une représentation schématique de l'outil 13 dans lequel est insérée une autre fixation temporaire 200, en l'occurrence une agrafe d'épinglage. Les agrafes 100 et 200 des figures 2 et 3 appartiennent à une même famille de fixations temporaires.

L'agrafe 200 est similaire à l'agrafe 100. Plus précisément, l'agrafe 200 comporte un corps 201 sensiblement cylindrique et disposé selon l'axe 12, une extrémité du corps étant pourvue d'une face 202 d'appui. L'agrafe 200 comporte également deux demi-pinces 203, pourvues chacune d'un bec 204 d'accrochage. L'agrafe 200 comporte en outre une tige 205, disposée selon l'axe 12 et mobile par rapport au corps 201. Une extrémité de la tige est fixée à la pince 203 et prolongée par la pince selon l'axe 12.

Un écrou 207 de commande est monté sur un filetage de la tige. Un ressort 208 de compression est disposé autour de la tige 205 entre l'écrou 207 et une extrémité 209 du corps 201, opposée à la face 202.

Les agrafes 100 et 200 sont de diamètres différents, c'est-à-dire qu'en position fermée, les assemblages respectivement formés par les demi-pinces (103, 203) sont conçus de sorte à présenter une forme extérieure sensiblement circulaire dont les diamètres sont différents.

Un détrompage est intégré à la famille de fixations à laquelle appartiennent les agrafes (100, 200) des figures 2 et 3. Plus précisément, à chaque diamètre d'agrafe (100, 200) est associée une longueur particulière (116, 216) d'écrou (107, 207) selon l'axe 12.

Les autres longueurs axiales des éléments des agrafes (100, 200) étant sensiblement égales par ailleurs, la longueur (110, 210) entre une extrémité (111, 211) de l'écrou et une butée (112, 212) du corps varie pour deux agrafes de diamètres différents. Dans l'exemple des figures 2 et 3, la longueur 116 de l'écrou 107 est plus faible que la longueur 216 de l'écrou 207. La longueur 110 de l'agrafe 100 est donc plus faible que la longueur 210 de l'agrafe 200.

Par ailleurs, les écrous (107, 207) ont des dimensions radiales identiques. Ainsi, lorsque l'agrafe 200 est insérée dans l'outil 13, comme sur la figure 3, l'écrou 207 vient se loger dans l'extrémité 20 de la cavité du manchon 18. L'extrémité 211 de l'écrou vient au contact de la butée 29 et déplace le manchon 18 en direction de l'arbre 22, ce qui fait varier la position axiale du manchon par rapport au cas de la figure 2. Le manchon 18 déplace la goupille 26 selon l'axe 27. Le capteur 30 détecte donc une position P' de la goupille, différente de la position P détectée dans le cas de la figure 2.

La mémoire 43 de données du boîtier 40 associe à la position P' un couple C' de serrage à appliquer à l'agrafe 200. Le couple C'est choisi comme un couple adapté au diamètre de l'agrafe 200. De même, le couple C, associé dans la mémoire 43 à la position P de la goupille, est choisi comme un couple adapté au diamètre de l'agrafe 100.

Le programme 46 adapte donc automatiquement le réglage de l'appareil 11 en fonction de la position P' de la goupille 26, la position dépendant de la longueur 210 de l'agrafe 200.

Dans la famille de fixations à laquelle appartiennent les agrafes 100 et 200, les longueurs (116, 216) différentes des écrous peuvent servir à la fois de détrompage visuel pour l'opérateur, et de moyen de réglage automatique d'un dispositif de pose desdites agrafes.

Un identifiant visuel supplémentaire, tel qu'une marque colorée dépendant du diamètre, peut également figurer sur une surface externe des agrafes (100, 200).

Une famille de fixations susceptibles d'être posées par l'outil 13 peut comporter un nombre illimité d'agrafes de diamètres différents, les agrafes présentant des dimensions radiales identiques pour l'extrémité (109, 209) de leurs corps et des écrous (107, 207). Par ailleurs, un ensemble 10 de pose peut comporter plusieurs outils 13 adaptables à un même appareil 11, chaque outil 13 étant par exemple dédié à une plage de diamètres et ayant des extrémités de corps (109, 209) et des formes d'écrou de commande (107, 207) variées pour distinguer les différentes plages de diamètres.

La figure 4 représente une vue schématique en coupe d'un outil 53 de pose et d'une agrafe 300 insérée dans ledit outil, selon un autre mode de réalisation de l'invention. L'outil 53 diffère de l'outil 13 dans son moyen de détection de position axiale, tous les autres éléments étant identiques par ailleurs. L'outil 53 peut être incorporé à l'ensemble 10 représenté à la figure 1.

L'agrafe 300 est similaire aux agrafes (100, 200) et peut faire partie d'une famille de fixations incorporant lesdites agrafes (100, 200).

Dans le mode de réalisation illustré à la figure 4, le moyen de détection de position axiale comporte un capteur magnétique 50. Ledit capteur est fixé, par exemple par collage, sur le premier fourreau extérieur 54 de l'outil 53. Ce capteur est relié par l'interface 45 au boîtier 40 représenté à la figure 1. En variante non représentée, le capteur magnétique 50 est fixé sur le deuxième fourreau 55 de l'outil 53.

Le moyen de détection de position comporte de plus un anneau aimanté 52 disposé sur le manchon 58, par exemple sur sa surface extérieure. Ainsi, lorsque l'agrafe 300 est insérée dans l'outil 53, une longueur 316 de l'écrou de commande 307 de l'agrafe 300 fait varier la position axiale du manchon 58 par rapport à sa position dans laquelle aucune agrafe n'est insérée. Le capteur magnétique 50 détecte la position à laquelle le manchon 58 a été déplacé, et envoie l'information au boîtier 40.

La figure 5 représente une variante du mode de réalisation de la figure 4. Plus précisément, la figure 5 représente une vue schématique en coupe d'un outil 73 de pose et d'une agrafe 400 insérée dans ledit outil. L'outil 73 est analogue à l'outil 53. L'outil 73 comporte notamment un moyen de détection de position axiale comprenant un capteur magnétique 50 fixé sur le premier fourreau extérieur 74, ou en variante non représentée, sur le deuxième fourreau 75. La différence entre les outils (53, 73) est que l'outil 73 ne comporte pas d'anneau aimanté sur le manchon 78.

L'agrafe 400 est similaire aux agrafes (100, 200, 300). Cependant, l'agrafe 400 présente une différence notable avec les agrafes précédemment décrites, en ce qu'elle porte un anneau aimanté 52 disposé sur son écrou de commande 407.

La dimension axiale de l'anneau 52 est la même pour toutes les fixations temporaires appartenant à une même famille que l'agrafe 400. Par ailleurs, l'anneau 52 est disposé toujours au même endroit sur l'écrou, par exemple à une extrémité 411 de l'écrou 407 opposée aux demi-pinces 403 de l'agrafe 400.

Dans cette famille de fixations, comme dans les exemples précédemment évoqués, les longueurs axiales des écrous 407 sont différentes en fonction du diamètre extérieur des demi-pinces 403.

Ainsi, lorsque l'agrafe 400 est insérée dans l'outil de pose 73, le capteur 50 détecte la position de l'aimant sur l'écrou 407 et envoie l'information au boîtier 40. Le programme 46 sélectionne alors le couple de serrage adéquat en fonction de cette mesure, qui dépend du diamètre extérieur des demi-pinces 403.

## Revendications

1. Famille de fixations (100, 200, 300, 400) temporaires pour l'assemblage temporaire d'au moins deux structures préalablement percées, du type comprenant :
- un corps (101, 201) pourvu d'une face (102, 202) d'appui susceptible de venir au contact d'une face avant des structures à assembler,
- au moins une pince (103, 203) destinée à traverser les perçages et pourvu d'un bec (104, 204) d'accrochage susceptible de s'appliquer contre une face arrière des structures à assembler,
- un mécanisme déplaçable par rapport au corps, ledit mécanisme comprenant une tige (105, 205) filetée disposée coaxialement au corps, une extrémité de ladite tige étant reliée à la pince, ledit mécanisme comprenant en outre un écrou (107, 207, 307, 407) de commande monté sur ladite tige,
ladite famille étant **caractérisée en ce qu'**elle comporte au moins deux fixations (100, 200, 300) temporaires de diamètre différent et dont les écrous de commande présentent une dimension extérieure radiale identique et une dimension extérieure axiale (116, 216, 316) différente.

2. Famille de fixations temporaires selon la revendication 1, chaque fixation comportant un identifiant visuel supplémentaire associé au diamètre de l'agrafe.

3. Famille de fixations temporaires (400) selon la revendication 1 ou 2, chaque fixation comportant un anneau magnétique (52) disposé sur l'écrou de commande (407).

4. Ensemble (10) de pose de fixations temporaires, ledit ensemble comportant :
- une famille de fixations selon l'une des revendications 1 à 3;
- un outil (13) de pose comprenant :
- un premier fourreau (14, 54, 74) cylindrique disposé selon un axe (12), ledit fourreau étant apte à coopérer avec le corps (109, 209) d'une fixation temporaire pour immobiliser ledit corps en translation selon l'axe,
- un deuxième fourreau (15, 55, 75) cylindrique logé dans le premier fourreau, ledit deuxième fourreau étant apte à coopérer avec le corps (109, 209) d'une fixation temporaire pour immobiliser ledit corps en rotation selon l'axe,
- un troisième fourreau (18, 58, 78) cylindrique logé dans ledit deuxième fourreau, ledit troisième fourreau étant mobile en rotation et en translation selon l'axe par rapport au premier fourreau,
une première extrémité (21) dudit troisième fourreau par rapport à l'axe étant munie de moyens (22) d'entraînement en rotation selon ledit axe, par un arbre de sortie d'un appareil moteur,
une seconde extrémité (20) dudit troisième fourreau par rapport à l'axe étant apte à coopérer avec l'écrou de commande (107, 207, 307, 407) de la fixation temporaire pour l'entraîner en rotation,
- un moyen (26, 30, 50, 52) de détection d'une position axiale du troisième fourreau par rapport au premier fourreau.

5. Ensemble selon la revendication 4, comportant une famille de fixations selon la revendication 1 ou 2 et tel que le moyen (30) de détection d'une position axiale du troisième fourreau comporte un capteur de position (30) et une goupille (26), disposée dans les premier et deuxième fourreaux (14, 15 ; 214, 215) cylindriques au contact d'une extrémité (25) du troisième fourreau (18, 218) cylindrique et apte à coulisser dans les premier et deuxième fourreaux (14, 15) cylindriques.

6. Ensemble selon la revendication 4, comportant une famille de fixations selon la revendication 1 ou 2 et tel que le moyen (50, 52) de détection d'une position axiale du troisième fourreau (58) comporte un capteur de position magnétique (50) disposé sur le premier ou le deuxième fourreau (54, 55) cylindrique, et un anneau magnétique (52) disposé sur le troisième fourreau (58) cylindrique.

7. Ensemble selon la revendication 4, comportant une famille de fixations selon la revendication 3 et tel que le moyen (50, 52) de détection d'une position axiale du troisième fourreau comporte un capteur de position magnétique (50) disposé sur le premier ou le deuxième fourreau (74, 75) cylindrique apte à détecter la position de l'anneau magnétique (52) disposé sur l'écrou de commande (407).

8. Ensemble selon l'une des revendications 4 à 7, comportant en outre un appareil moteur (11) de type visseuse-dévisseuse, ledit appareil comprenant :
- un arbre de sortie, apte à être relié à la première extrémité (21) du troisième fourreau (18, 58, 78) de l'outil de pose, pour entraîner ledit troisième fourreau en rotation par rapport au premier fourreau (14, 54, 74),
- un boîtier (40) d'asservissement de couple (C, C') de serrage des fixations temporaires, ledit boîtier comprenant un moyen (46) de réglage de l'appareil selon une valeur (C, C') de couple de serrage dépendante d'une position (P, P') axiale du deuxième fourreau (18, 58, 78) par rapport au premier fourreau (14, 54, 74),
- un moyen (45) de communication entre le moyen (30, 50) de détection d'une position axiale du troisième fourreau par rapport au premier fourreau et ledit boîtier (40) d'asservissement de couple.

9. Ensemble selon la revendication 8, tel que l'outil (13) de pose comprend un arbre (22) d'entraînement, apte à relier un arbre de sortie de l'appareil moteur (11) au troisième fourreau (18, 58, 78), ledit troisième fourreau étant relié en rotation audit arbre d'entraînement et mobile en translation par rapport audit arbre d'entraînement.

10. Ensemble selon les revendications 8 ou 9, dans lequel l'appareil est relié à une source d'alimentation électrique par un fil.

11. Ensemble selon les revendications 8 ou 9, dans lequel l'appareil est alimenté électriquement par une batterie.

## Patentansprüche

1. Gruppe temporärer Befestigungsmittel (100, 200, 300, 400) für das temporäre Zusammenfügen von mindestens zwei vorher gelochten Strukturen der Art, die Folgendes umfasst:
- einen Körper (101, 201), versehen mit einer Anlagefläche (102, 202), die geeignet ist, mit einer vorderen Fläche von zusammenzufügenden Strukturen in Kontakt zu kommen,
- mindestens eine Klemme (103, 203), die dazu bestimmt ist, die Lochungen zu durchqueren und mit einer Verankerungstülle (104, 204) versehen ist, die geeignet ist, gegen eine hintere Fläche der zusammenzufügenden Strukturen zur Anwendung zu kommen,
- einen bezüglich des Körpers versetzbaren Mechanismus, wobei der Mechanismus einen mit einem Gewinde versehenen Schaft (105, 205) umfasst, der koaxial an dem Körper angeordnet ist, wobei ein Ende des Schafts mit der Klemme verbunden ist, wobei der Mechanismus des Weiteren eine auf dem Schaft montierte Steuerungsmutter (107, 207, 307, 407) umfasst,
wobei die Gruppe **dadurch gekennzeichnet ist, dass** sie mindestens zwei temporäre Befestigungsmittel (100, 200, 300) verschiedener Durchmesser beinhaltet und von denen die Steuerungsmuttern eine identische radiale Außenabmessung und eine verschiedene axiale Außenabmessung (116, 216, 316) aufweisen.

2. Gruppe temporärer Befestigungsmittel nach Anspruch 1, wobei jedes Befestigungsmittel einen ergänzenden visuellen Identifikator beinhaltet, der mit dem Durchmesser der Heftklammer assoziiert ist.

3. Gruppe temporärer Befestigungsmittel (400) nach Anspruch 1 oder 2, wobei jedes Befestigungsmittel einen magnetischen Ring (52) beinhaltet, der auf der Steuerungsmutter (407) angeordnet ist.

4. Anbringungsbaugruppe (10) temporärer Befestigungsmittel, wobei die Baugruppe Folgendes beinhaltet:
- eine Gruppe von Befestigungsmitteln nach einem der Ansprüche 1 bis 3;
- ein Anbringungswerkzeug (13), umfassend:
- eine erste zylindrische Hülse (14, 54, 74), angeordnet entlang einer Achse (12), wobei die Hülse geeignet ist, mit dem Körper (109, 209) eines temporären Befestigungsmittels zum Immobilisieren des Körpers bei Translation entlang der Achse zusammenzuwirken,
- eine zweite zylindrische Hülse (15, 55, 75), aufgenommen in der ersten Hülse, wobei die zweite Hülse geeignet ist, mit dem Körper (109, 209) eines temporären Befestigungsmittels zum Immobilisieren des Körpers bei Rotation entlang der Achse zusammenzuwirken,
- eine dritte zylindrische Hülse (18, 58, 78), aufgenommen in der zweiten Hülse, wobei die dritte Hülse entlang der Achse bezüglich der erste Hülse rotations- und translationsbeweglich ist,
wobei ein erstes Ende (21) der dritten Hülse bezüglich der Achse durch eine Ausgangswelle einer Motorvorrichtung mit Mitteln (22) zum Rotationsantrieb entlang der Achse ausgestattet ist,
wobei ein zweites Ende (20) der dritten Hülse bezüglich der Achse geeignet ist, mit der Steuerungsmutter (107, 207, 307, 407) des temporären Befestigungsmittels zusammenzuwirken, um sie in Rotation zu versetzen,
- ein Detektionsmittel (26, 30, 50, 52) einer axialen Position der dritten Hülse bezüglich der ersten Hülse.

5. Baugruppe nach Anspruch 4, umfassend eine Gruppe von Befestigungsmitteln nach Anspruch 1 oder 2, und wobei das Detektionsmittel (30) einer axialen Position der dritten Hülse einen Positionssensor (30) und einen Bolzen (26) umfasst, angeordnet in der ersten und zweiten zylindrischen Hülse (14, 15; 214, 215) in Kontakt mit einem Ende (25) der dritten zylindrischen Hülse (18, 218), und geeignet, in die erste und zweite zylindrische Hülse (14, 15) zu gleiten.

6. Baugruppe nach Anspruch 4, umfassend eine Gruppe von Befestigungsmitteln nach Anspruch 1 oder 2, und wobei das Detektionsmittel (50, 52) einer axialen Position der dritten Hülse (58) einen magnetischen Positionssensor (50), angeordnet auf der ersten oder zweiten zylindrischen Hülse (54, 55), und einen magnetischen Ring (52), angeordnet auf der dritten zylindrischen Hülse (58), beinhaltet.

7. Baugruppe nach Anspruch 4, umfassend eine Gruppe von Befestigungsmitteln nach Anspruch 3, und wobei das Detektionsmittel (50, 52) einer axialen Position der dritten Hülse einen magnetischen Positionssensor (50) beinhaltet, angeordnet auf der ersten oder zweiten zylindrischen Hülse (74, 75), geeignet, die Position des auf der Steuerungsmutter (407) angeordneten magnetischen Rings (52) zu detektieren.

8. Baugruppe nach einem der Ansprüche 4 bis 7, beinhaltend des Weiteren eine Motorvorrichtung (11) der Umschrauberart, wobei die Vorrichtung Folgendes umfasst:
- eine Ausgangswelle, geeignet, um mit dem ersten Ende (21) der dritten Hülse (18, 58, 78) des Anbringungswerkzeugs verbunden zu werden, um die dritte Hülse bezogen auf die erste Hülse (14, 54, 74) in Rotation zu versetzen,
- ein Regelungsgehäuse (40) des Spannmoments (C, C') der temporären Befestigungsmittel, wobei das Gehäuse ein Regelmittel (46) der Vorrichtung nach einem Wert (C, C') des Spannmoments umfasst, das von einer axialen Position (P, P') der zweiten Hülse (18, 58, 78) bezüglich der ersten Hülse (14, 54, 74) abhängt,
- ein Kommunikationsmittel (45) zwischen dem Detektionsmittel (30, 50) einer axialen Position der dritten Hülse bezüglich der ersten Hülse und dem Regelungsgehäuse (40) des Drehmoments.

9. Baugruppe nach Anspruch 8, wobei das Anbringungswerkzeug (13) eine Antriebswelle (22), geeignet, um eine Ausgangswelle der Motorvorrichtung (11) mit der dritten Hülse (18, 58, 78) zu verbinden, umfasst, wobei die dritte Hülse rotationsmäßig mit der Antriebswelle und translationsbeweglich mit der Antriebswelle verbunden ist.

10. Baugruppe nach Ansprüchen 8 oder 9, wobei die Vorrichtung durch einen Draht mit einer Stromversorgungsquelle verbunden ist.

11. Baugruppe nach Ansprüchen 8 oder 9, wobei die Vorrichtung durch eine Batterie mit Strom versorgt wird.

## Claims

1. Family of temporary fasteners (100, 200, 300, 400), for the temporary assembly of at least two pre-drilled structures, comprising the following:
- a body (101, 201) with a bearing face (102, 202) able to come into contact with a front face of the structures to be assembled,
- at least one clip (103, 203) intended to be passed through the drilled holes, with a hooking spur (104, 204) that can be applied against a rear face of the structures to be assembled,
- a mechanism that can be moved relative to the body, comprising a threaded rod (105, 205) placed coaxially to the body, with one end of the rod connected to the clip, and a control nut (107, 207, 307, 407) screwed onto the rod,
the family is **characterized by** the fact that it comprises at least two temporary fasteners (100, 200, 300) with different diameters and nuts with an identical outer radial dimension and a different outer axial dimension (116, 216, 316).

2. Family of temporary fasteners according to Claim 1, with each fastener including an additional visual identifier associated with the diameter of the fastener.

3. Family of temporary fasteners (400) according to Claim 1 or 2, with each fastener including a magnetic ring (52) placed on the control nut (407).

4. Temporary fastener installation set (10) comprising:
- a family of fasteners according to one of Claims 1 to 3,
- an installation tool (13) comprising:
- a first cylindrical sheath (14, 54, 74) placed on an axis (12), capable of interacting with the body (109, 209) of a temporary fastener to prevent the body from moving on the axis,
- a second cylindrical sheath (15, 55, 75), housed within the first, capable of interacting with the body (109, 209) of a temporary fastener to prevent the body from rotating around the axis,
- a third cylindrical sheath (18, 58, 78) housed within the second that can be rotated and moved on the axis relative to the first sheath,
with one end (21) of the third sheath relative to the axis equipped with the means (22) to begin rotation around the axis via the output shaft of a motor system, and
the other end (20) of the third sheath relative to the axis capable of interacting with the control nut (107, 207, 307, 407) on the temporary fastener in order to rotate it,
- a means (26, 30, 50, 52) of detecting the axial position of the third sheath relative to the first sheath.

5. Set according to Claim 4, comprising a family of fasteners according to Claim 1 or 2 where a means (30) of detecting the axial position of the third sheath comprises a position sensor (30) and a pin (26) placed inside the first and second cylindrical sheaths (14, 15, 214, 215) touching one end (25) of the third cylindrical sheath (18, 218), which is capable of sliding into the first and second cylindrical sheaths (14, 15).

6. Set according to Claim 4 comprising a family of fasteners according to Claim 1 or 2 where a means (50, 52) of detecting the axial position of the third sheath (58) comprises a magnetic position sensor (50) placed on the first or second cylindrical sheath (54, 55) and a magnetic ring (52) placed on the third cylindrical sheath (58) .

7. Set according to Claim 4 comprising a family of fasteners according to Claim 3 where a means (50, 52) of detecting the axial position of the third sheath comprises a magnetic position sensor (50) placed on the first or second cylindrical sheath (74, 75) capable of detecting the position of the magnetic ring (52) placed on the control nut (407).

8. Set according to Claims 4 to 7 also comprising an electric-screwdriver-type motor system (11) consisting of:
- an output shaft that can be connected to the first end (21) of the third sheath (18, 58, 78) on the installation tool in order to rotate the said third sheath relative to the first (14, 54, 74),
- a tightening torque (C, C') control box (40) for the temporary fasteners comprising a means (46) of adjusting the system based on a tightening torque (C, C') dependent on an axial position (P, P') of the second sheath (18, 58, 78) in relation to the first (14, 54, 74),
- a means (45) of communication between the means (30, 50) of detecting the axial position of the third sheath in relation to the first and the torque control box (40).

9. Set according to Claim 8 where the installation tool (13) comprises a drive shaft (22) capable of connecting an output shaft from the motor system (11) to the third sheath (18, 58, 78), with the said third sheath connected to the drive shaft while rotating and movable relative to the said drive shaft.

10. Set according to Claims 8 or 9, where the system is connected to an electrical power source using a wire.

11. Set according to Claims 8 or 9, where the system is electrically powered by a battery.
